# EUROPEAN PATENT SPECIFICATION

(11) **EP 0 258 930 B1**
(45) Date of publication and mention of the grant of the patent: **20.07.1994**
(21) Application number: 87201573.0
(22) Date of filing: 20.08.1987
(51) Int. Cl.: A01D 43/10

(54) **An agricultural crop processing machine**
Ernteaufbereitungsmaschine
Machine pour le traitement de récolte

(30) Priority: 21.08.1986 NL 8602125
(43) Date of publication of application: 09.03.1988
(73) Proprietor: C. van der Lely N.V., NL-3155 PD Maasland (NL)
(72) Inventor: van der Lely, Cornelis, Zug (CH)
(74) Representative: Mulder, Herman

(56) References cited:
- EP-A- 0 211 658
- WO-A-81/02966
- DE-A- 2 001 374
- FR-A- 580 866
- FR-A- 2 328 386
- FR-A- 2 386 245
- FR-A- 2 403 736
- GB-A- 588 439
- GB-A- 1 149 171
- GB-A- 1 515 269
- GB-A- 2 022 386

## Description

The invention concerns an agricultural machine for processing crop, such as e.g. grass, which machine comprises a drum-shaped processing member rotatable about an axis and at least three counter-processing members co-operating with the drum-shaped processing member and extending around part of the periphery of and near the periphery of said drum-shaped processing member, intermediate spaces being provided between counter-processing members adjacent to each other in a direction parallel to the axis of rotation of the drum-shaped processing member, said counter processing members including projecting arms extending at least substantially parallel to a plane extending perpendicularly to the axis of rotation of the drum-shaped processing member.

A machine of this kind is known from GB-A-588 439. The counter-processing members of this known device are formed by radially extending fingers. Further it is noted that EP-A-0 211 658 shows an agricultural machine of the above-mentioned kind. This document, however, is published after the priority date of this application.

It is an object of the invention to provide a machine of the above-defined type, by means of which the crop can be processed in an advantageous manner. According to the invention, this can be accomplished in that at least the counter-processing members are formed by U-shaped beams co-operating with the drum-shaped processing member, said projecting arms being formed by legs included in the cross-section of the beams.

The beam-shaped members are of a strong construction. In this situation, the crop can be held tightly between said drum-shaped member and said beam-shaped counter-processing member, so that e.g. the crop stalks can be crushed and/or broken in an approprate manner. The crop passing through between said drum-shaped member and said counter-processing member can move to some extent in the intermediate spaces between said beams, as a result of which the processing of the crop is improved.

WO-A-81/02966 discloses a machine for processing crop comprising a drum-shaped processing member and two counter-processing members. In this known device there are only two counter-processing members. The counter-processing members are not spaced relative to each other in a direction parallel to the axis of rotation of the drum-shaped member. Further, the counter-processing members are in the form of an inverted ridge-shaped panel and a guide flap and not in the form of beams, according to the invention.

In a further embodiment of the implement according to the invention, the interspace between the adjacent counter-processing members is at least equal to approximately half the width of a beam. Hereby the crop moving between the drum-shaped processing members and the counter-processing member can move around the projecting arms of the counter-processing member without being broken totally.

A favourable construction of the invention can be obtained when the counter-processing members have each one end connected to a carrier beam which extends at least substantially parallel to the axis of rotation of the drum-shaped processing member.

In a further embodiment of the machine according to the invention, a counter-processing member is provided capable of movement relative to the axis of rotation of the drum-shaped member. Thus, the processing operation between the counter-processing members and the drum-shaped processing member can be adapted to some extent to the quantity of crop present between said processing members.

An advantageous embodiment of the machine according to the invention is obtained when the machine includes at least one mower member fitted to a mower-member carrier beam, the drum-shaped processing member and the counter-processing member being fitted to that portion of the machine which includes said mower member. Then the mower member can perform a first treatment of the crop by cutting same loose from the soil, whereafter the crop can be further processed between the drum-shaped processing member and counter-processing members. An appropriate guiding of the crop from the mower member to the drum-shaped processing member can be obtained by disposing a guide plate at some distance above the mower member. In a further embodiment of the machine according to the invention, the drive of the drum-shaped processing member is coupled to transmission members in a transmission gear box, which transmission members are coupled to the mower member, a coupling detachable from said transmission members being provided between said transmission members in the gear box and said drum-shaped processing member, and the said coupling being located near one end of the drum-shaped member. Thus, the drum-shaped processing member is detachable from the machine. In addition, the drum-shaped processing member can be pivoted upwardly in an advantageous manner with respect to the carrier in order to reach e.g. a transportation position, wherein the drum-shaped member can be placed for transportation of the machine.

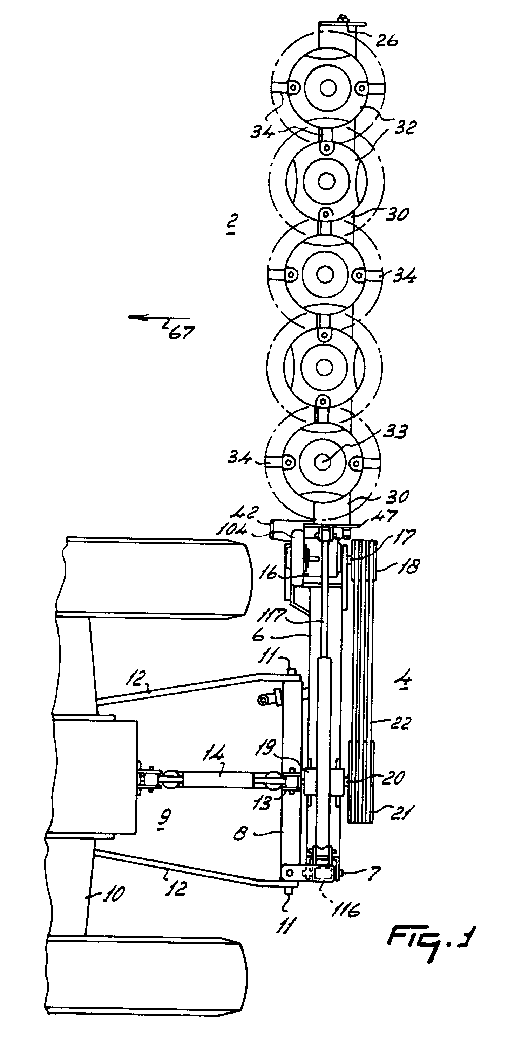

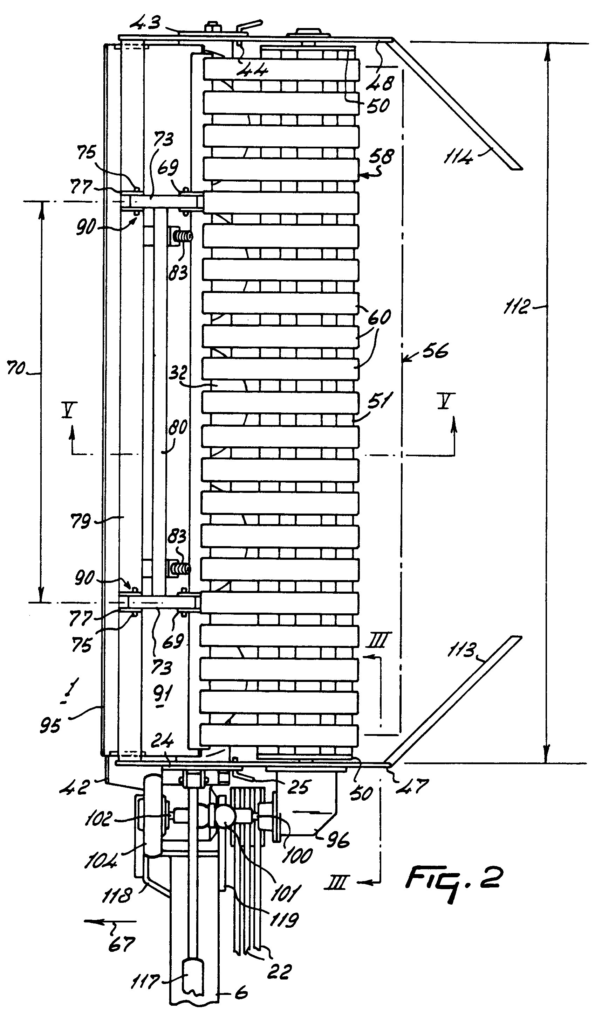

For a better understanding of the invention and to show how the same may be carried into effect, reference will now be made, by way of example, to the accompanying drawings of an advantageous embodiment of a machine according to the invention, in which drawings:
Figure 1 is a plan view of the machine according to the invention, part of the machine having been omitted;
Figure 2 is, to an enlarged scale, a plan view of part of the machine according to the invention, the part omitted in Figure 1 now having been shown;
Figure 3 is, to an enlarged scale, a view of part of the machine, taken on the line III-III in Figure 2;
Figure 4 is a cross-sectional view through transmission members of the machine, taken on the line IV-IV in Figure 3;
Figure 5 is, to an enlarged scale, a cross-sectional view of the machine, taken on the line V-V in Figure 2, and
The machine shown in Figures 1 to 5 is an agricultural machine for processing crop. The agricultural machine comprises a mower section 2 and a section 1 for further processing of the crop. The sections 2 and 1 are mounted on a carrier 4 which forms part of the machine and by means of which the machine can be coupled to a tractor or a similar suchlike vehicle.

The carrier 4 includes a carrier arm 6 which is pivotally connected to a coupling trestle 8 by means of a pivotal shaft 7 extending horizontally in the direction of operative travel. The carrier 4 can be coupled to the three-point lifting hitch 9 of a tractor or an other suchlike vehicle by means of the coupling trestle 8. To that end, the coupling trestle 8 has two coupling pins which can be coupled to the lifting arms 12 of the three-point lifting hitch. In addition, the coupling trestle 8 has two strips 13, to which the top rod 14 of the three-point lifting hitch 9 can be coupled.

That end of the carrier arm 6 remote from the pivotal shaft 7 includes a transmission box 16, in which a shaft 17 is bearing-supported. At its end projecting at the rear side from the box 16, the shaft 17 is provided with a pulley 18. In addition, the carrier arm 6 includes a bearing 19 in the region of the mid-way point, seen in plan view, of the coupling trestle 8, in which a coupling shaft 20 is bearing-supported. At the rear side of the carrier 6, the coupling shaft 20 projects outside the bearing 19 and is provided with a pulley 21. Ropes 22 are arranged about the pulleys 18 and 21. In a manner not shown in further detail, the coupling shaft 20 can be coupled at the front side to an intermediate shaft which can be coupled to the power take-off shaft of the tractor.

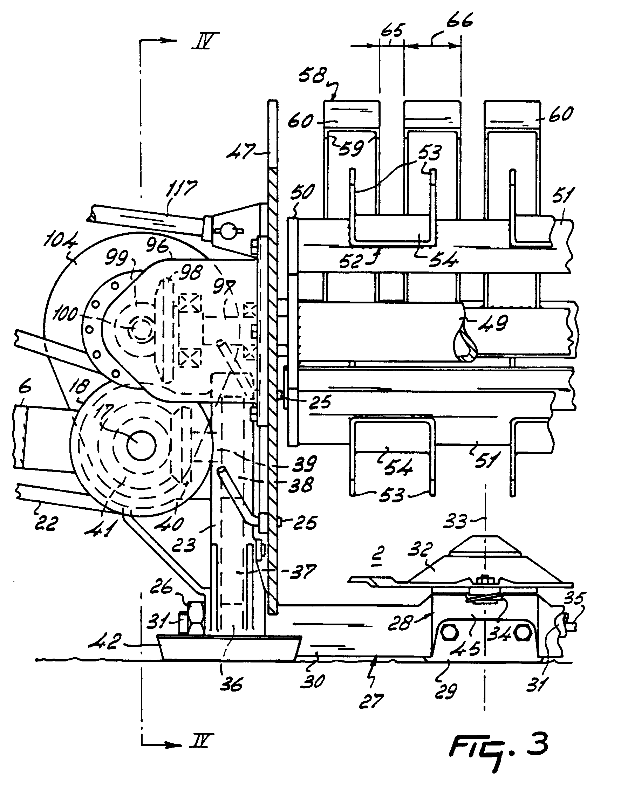

A gear box 23 is rigidly connected to the transmission box 16. As is apparent in particular from Figure 3, the gear box 23 extends downwardly from the transmission box 16 and is located at that side of the transmission box 16 remote from the carrier 6. At the side remote from the transmission box 16, the gear box 23 has a carrier support 27 constituted by a plate-shaped member. The section 3 is connected to the carrier support 27 by means of coupling members 25.

The mower section 2 includes a carrier beam 27 which is assembled from drive units 28 and spacers 30. The drive units 28 and the spacers 30 are interconnected by a connection member 31. The connection member 31 is a tensile rod, by means of which the drive units 28 and the spacers 30 are drawn up against each other. The tensile rod 31 extends through hollow cavities of the drive units and the spacers. The carrier beam 27 is attached to the bottom side of the gear box 23 by means of the tensile rod 31. In this situation, the tensile tod 31 extends near the gear box 23 through said box. A spacer 30 forming part of the carrier beam 27 is pulled against the gear box 23 by means of the tensile rod 31 having a nut 26. Preferably, the drive units 28 are prefabricated units which are provided with a mower member 32 or to which a mower member 32 can be fitted. The mower members 32 are supported rotatably in the gear boxes 45 forming part of the drive units 28. The mower members 32 are capable of rotation about axes of rotation 33 which, during operation, extend in height. Each mower member is provided with mowing knives 34 which are arranged diametrically relative to the axis of rotation 33. The gear box 45 includes transmission members which are connected to a drive shaft 35 for driving the mower members. The drive shaft 35 extends through the entire length of the carrier beam 27 and is connected to a gear wheel 36 in the gear box 23. The gear wheel 36 is connected to a shaft 39 by means of gear wheels 37 and 38. The shaft 39 extends into the transmission box 16 and is coupled therein to a bevel gear wheel 40, which meshes with a bevel gear wheel 41. The bevel gear wheels 40 and 41 are located in the transmission box 16, said bevel gear wheel 41 being mounted on the shaft 17. A supporting shoe 42 is fitted to the bottom side of the gear box 23, while the drive units 28 include supporting shoes 29. The machine can bear on the soil with at least part of its weight via the shoes 29 and 42. A carrier support 43 similar to the carrier support 24 is disposed on that end of the carrier beam 27 remote from the gear box 23. The supporting carriers 24 and 43 extend upwardly from the carrier beam 27. The carrier support 43 is a support for the processing section 3 which is coupled thereto by means of coupling members 44 constituted by coupling pins.

The processing section 3 includes two wall supports 47 and 48 which are coupled to the carrier supports 24 and 43 by means of the coupling members 25 and 44, respectively. The processing section 3 embodying the invention includes a carrier shaft 49 provided parallel to the carrier beam 27 between the wall supports 47 and 48. The carrier shaft 49 is supported rotatably in the wall supports 47 and 48. Supporting plates 50 are rigidly attached to the carrier shaft near the wall supports 47 and 48. In this embodiment, the supporting plates 50 have a square configuration. In the corners of the supporting plates 50 there are fitted carrier beams 51 which extend parallel to the carrier shaft 49 and which are thus provided uniformly distributed about said carrier shaft 49. At the sides remote from the carrier shaft 49, the carrier beams 51 are fitted with processing members 52. The processing members 52 are substantially in the form of U-shaped brackets which are fitted against the beams 51 by means of their backsides 54. The legs 53 of said brackets constitute processing arms 53 which extend radially relative to the carrier shaft 49. The assembly formed by the carrier shaft 49 with the supporting plate 50, the carrier beams 51 and processing members 52 constitutes a drum-shaped processing member 56 which is provided rotatably about the centre line 55 of the carrier shaft 49 between the wall plates 47 and 48. In this situation, the centre line 55 constitutes an axis of rotation for the drum-shaped member 56 forming part of the processing section 3.

The drum-shaped member 56 co-operates with counter-processing members 58 provided about at least part of the periphery of the drum-shaped member. As is apparent in particular from Figure 3, the processing members 58 are formed by beams of a U-shaped cross-section, which beams constitute counter-processing members relative to the processing members 52. The back sides 60 of the U-shaped processing members 58 face away from the axis of rotation 55, while the legs 59 extend, as projecting arms, in the direction of the axis 55 and parallel to an imaginary plane extending perpendicularly to the axis 55. The processing members 58 are parallel to each other and are connected to a carrier beam 61 by means of their low ends. Relative to the direction of operative travel 67 of the machine 1, the carrier beam 61 is located before the drum-shaped member 56. In the operating position of the machine, the carrier beam 61 is located approximately at the level of the axis of rotation 55. From the carrier beam 61, the processing members 58 extend around the axis of rotation 55 of the drum-shaped member 56 through an angle 62 which exceeds 90°. In this embodiment, the angle 62 is approximately 120°. The processing members 58 extend through an angle 63 of approximately 30° behind the vertical plane 68 which accommodates the axis of rotation 55. The first portion 64, extending from the carrier beam 61, of the processing members 58 is approximately straight, whilst the remaining portion is folded through an angle of approximately 90° around the drum-shaped member 56. The processing members 58 are interspaced by a distance 65, which distance is approximately equal to half the width 66 of the processing members. The distances 65 form open interspaces between the members 58. The distance 65 is preferably more than 2 cms and less than 7 cms. In this embodiment, the width 66 is approximately 7 cms, whilst the height 111 is approximately 2 cms. The projecting arms 53 and the arms 59 are so arranged relative to each other that the arms 53 extend parallel to a plane extending perpendicularly to the axis of rotation 55 in a direction towards the centre of the processing members 58, the arrangement being such as is apparent in particular from Figure 3.

The processing members 58 are disposed such that they are slightly movable relative to the axis of rotation 55 of the drum-shaped member 56. In this situation, the processing members 58 are movable within certain limits in a direction at least substantially perpendicularly to the axis of rotation 55. To accomplish this movability, the carrier beam 61 is provided such in the processing section 3 that it is capable of movement. For that purpose the carrier beam 61 has two pairs of lugs 69, which are spaced apart by a distance 70 which is approximately equal to half the distance between the wall plates 47 and 48. The carrier beam 61 is of such a length that it has its extreme ends located at a short distance from the wall supports 47 and 48. The carrier beam 61 and the processing members 58 arranged across the entire length of said carrier beam extend substantially through the entire length of the drum-shaped member 56. At a level higher and lower than the carrier beam 61, coupling arms 73 and 74 are coupled pivotally to the lugs 69 by means of pivotal shafts 71 and 72. The coupling arms 73 ands 74 are pivotally coupled by means of pivotal shaft 75 and 76 to lugs 77 and 78 fastened to a frame beam 79. The lugs 77 and 78 extend upwardly and downwardly, respectively, from the frame beam 79. The pivotal shafts 71, 72, 75 and 76 constitute pivotal shafts of a parallelogram structure forming a quadrangular structure, by means of which the carrier beam 61 is provided parallel to itself capable of movment relative to the frame beam 79 and the drum-shaped member 56. By means of its ends, the frame beam 79 is rigidly connected to the wall supports 47 and 48.

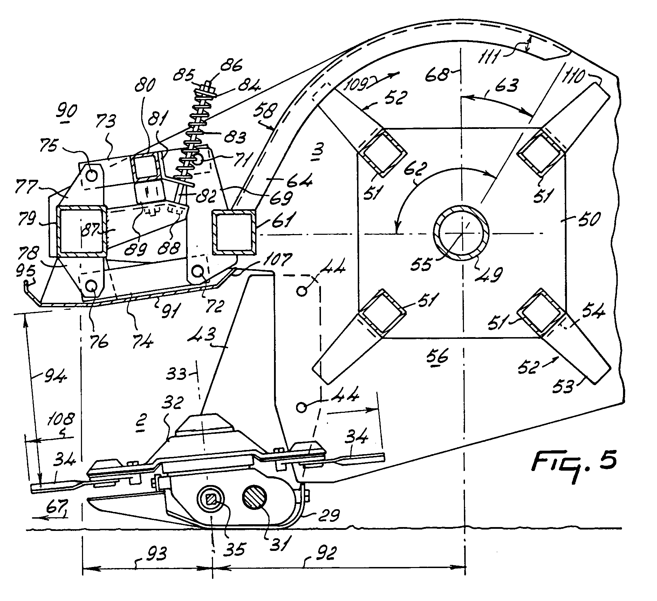

A connection beam 80 is disposed between the upper arms 73 of the parallelogram structure. Lugs 81 are fitted to the beam 80 near the arms 73. The lugs 81 have apertures, through which bolts 82 extend. Pressure springs 83 are arranged around the bolts 82 above the lugs 81. The pressure springs 83 bear with their lower ends on the lugs 81 and by means of their upper ends against rings 84 arranged around the bolts 82. The rings 84 bear on nuts 85 which are screwed on threaded ends 86. The frame beam 79 is provided with supports 87 which extend to near the lugs 81 and in which apertures are made, through which the bolts 82 also extend. The heads 88 of the bolts 82 bear against the bottom side of the supports 87. At their upper ends, the supports 87 have stops 89 which are made of a resilient material and co-operate with the connection beam 80. In this embodiment, the resilient stops 89 are formed by resilient rubber, but they may also consist of other resilient members. Below the parallelogram structures 90, formed by the arms 73 and 74 and the lugs 69, 77 and 78, a guide plate 91 is arranged between the wall supports 47 and 48. The guide plate 91 is rigidly connected to the wall supports 47 and 48 and the beam 79. The guide plate 91 extends substantially across the entire distance between the wall plates 47 and 48, and hence through the entire length of the drum-shaped member 56. The guide plate is positioned by means of its front side approximately above the front side of the mower members, as is apparent in particular from Figure 5. The rear side 107 of the guide plate extends to under the carrier beam 61 and hence to the lower ends of the counter-processing members 58. The guide plate is located at a distance 94 above the mowing knives 34 of the mower members, which distance is approximately equal to half the diameter 108 of the mower members. The front side 95 of the guide plate 91 extends to in front of the frame beam 79. The frame beam 79 is located, in the direction of operative travel 67, at a distance 93 before the mid-point of the mower members 32. Seen in plan view, the carrier beam 61 is located just behind the mid-point of the mower members. Relative to the direction 67, the axis of rotation 55 of the drum-shaped member 56 is located at a distance 92 from the mid-point of the mower members, which distance is less than the diameter 108 and exceeds half the diameter 108 of the mower members.

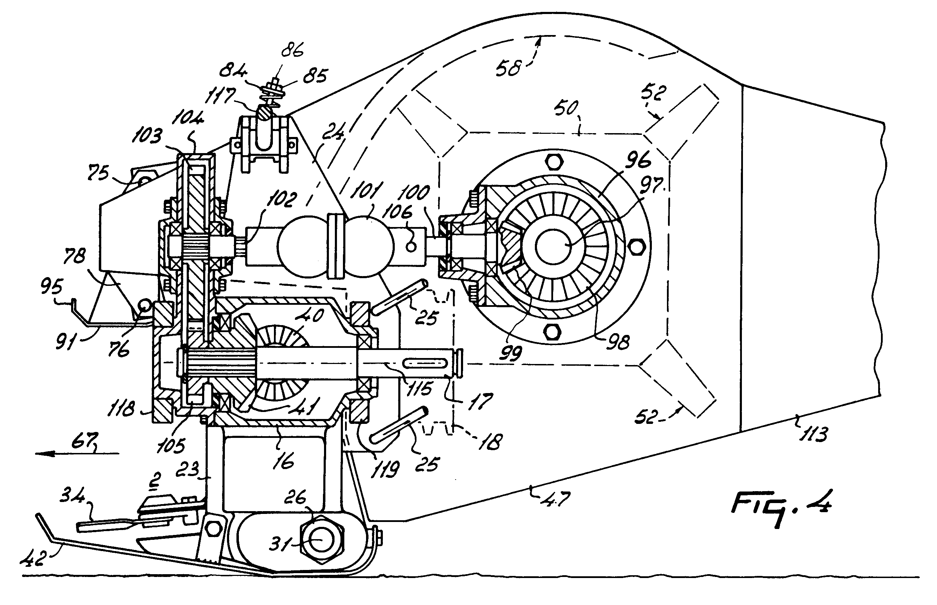

At that side of the wall support 47 of the processing section 3 facing the side of the carrier 4, a gear box 96 is mounted. The carrier shaft 49 is connected to a shaft 97, which reaches to into the gear box 96 and is bearing-supported therein. The shaft 97 has mounted on it a bevel gear wheel 98, which meshes with a bevel gear wheel 99 mounted on a coupling shaft 100. The gear wheels 98 and 99 are accommodated in the gear box 96, while the coupling shaft 100 extends forwardly from the gear box 96 perpendicularly to the axis of rotation 55. By means of a coupling 101, the coupling shaft 100 is coupled to a coupling shaft 102 which is bearing-supported in a gear box 104. The gear box 104 is mounted on the front side of the transmission box 16 and comprises two meshing spur gears 103 and 105. The gear wheel 103 is mounted on the shaft 102, while the gear wheel 105 is connected to the shaft 17. The coupling 101 is detachable from the shaft 102 by means of splines, as is apparent in particular from Figure 4. The coupling 101 is rigidly connected to the shaft 100 by means of a pin 106.

During operation, the implement is connected to the lifting hitch of a tractor or a suchlike vehicle, as is shown in particular in Figure 1. In this working position of the implement, it is moved during operation in the direction 67, the mower section 2 and the section 3 extending transversely to said direction of operative travel 67. When the implement is in operation, the mower members 32 are rotated. By their rotation, during travel of the machine, the mower members will cut crop standing in the field and will discharge same to the rear. The mown crop is picked up by the drum-shaped member 56, which is rotated during operation about the axis of rotation 55, and discharged between the drum-shaped member 56 and the processing members 58 to the rear relative to the normal direction of operative travel 67. Thus, the implement constitutes an agricultural machine for processing crop, which processing operation consists in mowing and further processing of said crop.

The mower members and the processing member 56 are caused to rotate from the coupling shaft 20 which, on coupling of the machine to the lifting hitch, is coupled to the power take-off shaft of the tractor via an intermediate shaft (not shown). The shaft 17 is rotated via the pullies 21 and 18 and the ropes 22. The drive shaft 35 is rotated from the shaft 17 via the bevel gear wheels 41 and 40 and the gear wheels 38, 37 and 36. The shaft 35 rotates the transmission members, which are located in the gear boxes 45 of the drive units 28 and to which the mower members 32 are connected. The transmission members in the gear boxes 45 are of such a structure that the mower members 32 can be induced to rotate in the desired direction. Usually, adjacent mower members will rotate in the opposite direction. Then the mower member nearest to the carrier 4 is usually induced to rotate such that its front side moves away from the side where the carrier 4 is located. The drum-shaped member 56 is caused to rotate from the shaft 17 via the gear wheels 105 and 103, the shaft 102, the coupling 101, the shaft 100 and the bevel gear wheels 99 and 98 which are connected to the carrier shaft 49 via the shaft 97. The drive of the drum-shaped member 56 is such that it is caused to rotate in the direction indicated by the arrow 109 (Figure 5). The crop mown by the mower members 2 is conveyed rearwardly across the mowing section 2 and is collected near the rear side of the mower members 32 by the drum-shaped member 56. The projecting processing arms 53 of the drum-shaped member catch the crop and take same along in their direction of rotation indicated by the arrow 109. The picked-up crop is pressed against that side of the processing members 58 which faces the drum-shaped member 56, is conveyed between the processing members 58 and the processing members 52 to the rear across the drum-shaped member and is deposited on the soil at the rear side of the drum-shaped member. Thus, the mown crop is deposited very loosely on the ground behind the machine. This loose deposition the crop promotes a proper and fast drying thereof. The crop can be processed such between the processing members 58 and the processing members 52 that e.g. ears and stalks are broken or crushed to a greater or lesser extent, so that the drying process of the crop deposited behind the machine can be effected more rapidly.

Due to the fact that the processing members 58 are suspended from the frame beam 79 such that they are movable relative to the axis of rotation 55, the processing members 58 can deflect to a greater or less extent relative to the drum-shaped member 56 in a direction perpendicular to the axis of rotation 55. Due to the parallelogram structures 90, the processing members 58 are together movable parallel to themselves relative to the drum-shaped member 56 so as to be able to allow a greater of lesser quantity of the crop collected by the processing members 52 to pass between the processing members 58 and the processing members 52. At the same time, the desired manner of processing the mown crop can be influenced. The lowest position the processing members 58 are capable of assuming, and hence the minimum spacing between the processing members and the drum-shaped member 56, is determined by the stop 89 and its resilience. These have been chosen such that, with the smallest possible distance between the processing members 58 and the drum-shaped member 56, the ends of the projecting processing arms 53 are located at a short distance from the back sides 60 of the processing members 58. In this situation, the extreme ends 110 of the arms 53 are located between the arms 59 of the processing members 58, the arrangement being such as is shown in particular in Figure 5. The shortest distance between the back side 66 and the extreme ends 110 will, preferably, be approximately equal to half the length 111 of the arms 59.

The springs 83 exercise a pressure on the lugs 81 and hence on the connection beam 80. Thus, the springs 83 exercise a downward force on the parallelogram structures 90 relative to the frame beam 79. Thus, the springs 83 exercise a downward pressure so as to keep the processing member 58 as close as possible to the drum-shaped member 56. The processing members 58 together form a what may be considered to be a resiliently deflectable screen around the drum-shaped member 56. The processing members 58 can deflect upwardly against the pressure of the springs 83 under the pressure of the quantity of crop conveyed between the processing members 58 and the drum-shaped member 56 in the direction 109 about the axis of rotation 55. The pressure of the springs 83 can be set by turning the nuts 85 on the threaded ends 86 of the bolts 82. The breaking and/or crushing action between the members 58 and 52 can be influenced by setting said pressure. The processing members 58 are spaced apart by distances 65. As a result thereof, the crop present between the drum-shaped member 56 and the processing members 58 can slightly deflect outwardly in the interspaces 65 formed between the the beams 58. Consequently, the pressure exercised on the crop present between the processing members 58 and the drum-shaped member 56 can be varied somewhat during its movement in the direction indicated by the arrow 109. This will advantageously influence the processing of the crop.

Owing to of their shape, the processing members 58 are strong and local deflection will not be possible, so that the crop can be processed in the desired manner between the processing members 56 and 58.

The guide plate 91 forms an appropriate guiding to the rear of the crop between this plate and the mower members. As a result thereof, the mown crop can be advantageously collected by the processing members 52 of the drum-shaped 56. The guide plate 91 and the walls 47 and 48, to which the ends of the guiding plate 91 are contiguous, form above the mower members 82 a closed channel-like space which constitutes a proper guide for the mown crop to the members 58 and the drum-shaped member 56 constituting the further processing members. The processing members 58 are distributed across the entire space between the wall supports 47 and 48 of the processing section 3. The distance 70 between the parallelogram structures 90, which constitute a carrier means for the processing members 58, is chosen such that the overall assembly consisting of the processing members 58 has a stable position in the section 3. The angle 62 can optionally be chosen more or less wide depending on the specific requirements for the processing of the crop. If so desired, the position of the guide plate 91 over the mower members may be at a distance larger or smaller than the distance 94. Optionally, to change the distance 94, the position of the frame beam 79 and the carrier beam 61 can be chosen more or less high above the mower members. The location of the beams 61 and 79 with respect to the axis of rotation 55 can be changed thereby. The distance 92 has been chosen such that no crop can escape over the mower members and under the drum-shaped member 56 without being caught by the processing members 52 for discharge in the direction indicated by the arrow 109. The processing section 3 of the machine can be removed in a simple manner from the section 2 and the carrier 4 by detaching the coupling pins 25 and 44. The section 3 can then be removed from the machine by pushing away the wall supports 47 and 48 from between the carrier supports 24 and 43. Then the coupling 101 can be detached from the shaft 102 because of the spline connection between the shaft 102 and the coupling 101. The carrier 4 and the mower section 2 can then be used for mowing crop independently of the section 3. The crop is then deposited on the soil behind the mowing implement, without it being processed by a processing member such as the processing member 3. The structure of the processing member 3 with the highly curved beam-shaped processing members 58 can also be used in a crop processing machine not comprising a mower section. The position of the drum-shaped member 56 co-operating with the processing members 58 can then be chosen such that, for example, the rotating drum-shaped member 56 picks up the crop from the soil and passes same through its periphery and the processing members 58 for processing the crop in the desired manner, e.g. depositing same in a loose swath on the soil. The section 3 may then be connected only to a carrier 4. The section 3 can then bear on the soil with its entire weight or part thereof, e.g. via supporting shoes or wheels.

The crop processed by the processing section 3 is deposited behind the drum-shaped member 56 in a swath which is narrow compared with the width 112 of the section 3 because of the presence of swather members 113 and 114 behind the drum-shaped member 56. The swather members 113 and 114 are fitted to the wall supports 47 and 48. The swather members 113 and 114 can be of such a shape that the crop is deposited in a swath of the desired width after having been processed by the section 3.

For manoeuvering the machine 1 on the field or transportating same by road, its width can be narrowed by hinging upwardly that section of the machine formed by the mower section 2 and the processing section 3 relative to the carrier 4. Said sections can be hinged upwardly about the centre line 115 of the shaft 17. For that purpose, a lifting mechanism 117 is provided between the upper side of a vertical support 116 connected to the coupling trestle 8 and the supporting plate 24. The lifting mechanism 117 includes a hydraulic cylinder which, in a manner not shown in further detail, is connectable to the hydraulic system of the tractor 1. By hydraulically reducing the length of the lifting mechanism 117 between the upper side of the support 116 and plate 24, the assembly formed by the mower section 2 and the processing section 3 is pivoted upwardly about the centre line 115 constituting a pivotal shaft. This pivoting action can be continued until the mower section 2 and the processing section 3 extend substantially vertically upwards from the end of the carrier 4 as one integral whole. In addition, a resilient element is preferably provided between the carrier support 24 and the upper end of the support 116. This resilient element can then effect that the mower section 2 can pivot resiliently together with the processing section 3 about the pivotal shafts 7 and 115 during travel of the implement in the direction indicated by the arrow 67. Thus, the mower section 2 can adapt itself together with the section 3 to unevennesses of the soil. The resilient element can further effect that at least part of the weight of the mower section 2 together with the section 3 is transferred to the support 116 and hence to the lifting hitch 9 of the tractor 10. If only part of the entire weight of the machine bears on the soil via the shoes 29 and the shoe 42, the adaption to unevennesses of the soil can be influenced advantageously. The movement of the section 2 and the section 3 about the pivotal shaft 115 can be accomplished because of the fact that the transmission box 16 at the the end of the carrier arm 6 is provided pivotally about the shaft 115, which is not shown in further detail. In this situation, the transmission box 16 is arranged pivotally with the portions connected thereto between the arms 118 and 119 fitted at the ends of the carrier arm 6. The gear boxes 23 and 104 form an integral whole with the transmission box 16 for movement about the pivotal shaft 115. The machine described and illustrated is particularly suitable for e.g. mowing standing grass and processing same further.

## Claims

1. An agricultural machine for processing crop, such as e.g. grass, which machine comprises a drum-shaped processing member (56) rotatable about an axis (55) and at least three counter-processing members (58) co-operating with the drum-shaped processing member and extending around part of the periphery of and near the periphery of said drum-shaped processing member, intermediate spaces (65) being provided between counter-processing members adjacent to each other in a direction parallel to the axis of rotation of the drum-shaped processing member, said counter processing members including projecting arms extending at least substantially parallel to a plane extending perpendicularly to the axis of rotation (55) of the drum-shaped processing member, characterized in that at least the counter-processing members (58) are formed by U-shaped beams (58) co-operating with the drum-shaped processing member, said projecting arms (59) being formed by legs included in the cross-section of the beams.

2. A machine as claimed in claim 1, characterized in that the interspace (65, 124) between the adjacent counter-processing members (58, 121) is at least equal to approximately half the width of a beam.

3. A machine as claimed in claim 1 or 2, characterized in that the counter-processing members (58) have each one end connected to a carrier beam (61) which extends at least substantially parallel to the axis of rotation (55) of the drum-shaped processing member (56).

4. A machine as claimed in claim 3, characterized in that each counter-processing member (58) extends from the carrier beam (61) in a direction parallel to a plane extending perpendicularly to the axis of rotation (55) of the drum-shaped processing member (56).

5. A machine as claimed in claim 4, characterized in that the counter-processing members (58) extend from the carrier beam around the axis of rotation of the drum-shaped member through an angle which exceeds 90°.

6. A machine as claimed in any one of the preceding claims, characterized in that a counter-processing member (58) is arranged capable of movement relative to the axis of rotation (55) of the drum-shaped member (56).

7. A machine as claimed in claim 6, characterized in that a counter-processing member (58, 121) is resiliently movable relative to the axis of rotation (55) of the drum-shaped member (56).

8. A machine as claimed in claim 3 and claim 6 or 7, characterized in that the carrier beam (61) is pivotally coupled in the machine by pivot shafts (71, 72) extending parallel to the axis of rotation of the drum-shaped processing member.

9. A machine as claimed in claim 6, 7 or 8, characterized in that a counter-processing member (58) is connected capable of movement by means of a quadrangular structure (90) to the frame of the machine.

10. A machine as claimed in any one of claims 6 to 9, characterized in that a movable counter-processing member (58) is connected to a frame beam (79) of the machine, which beam, located in front of the drum-shaped member (56), taken in the direction of operative travel (67) of the machine, extends at least substantially parallel to the axis of rotation (55) of the drum-shaped member and is located at least substantially at the level of said axis of rotation.

11. A machine as claimed in any one of claims 6 to 10, characterized in that the movable counter-processing member (58) co-operates with a spring-loaded element (83) which exercises a force on the movable counter-processing member in the direction of a stop (89), it being possible for the counter-processing member to deflect against the spring action in a direction away from the axis of rotation of the drum-shaped member.

12. A machine as claimed in any one of the preceding claims, characterized in that the machine includes at least one mower member (32) mounted on a mower-member carrier beam (27), the drum-shaped processing member and the counter-processing member being arranged on that portion of the machine which includes the mower member.

13. A machine as claimed in claim 12, characterized in that the mower-member carrier beam comprises drive units (28) and spacers (30) which are intercoupled by means of a tensile rod (31).

14. A machine as claimed in any one of the preceding claims, characterized in that the drum-shaped processing member (56) and the counter-processing member (58) are arranged between two wall supports (47, 48) which extend at least substantially perpendicularly to the axis of rotation (55) of the drum-shaped processing member, and that the wall supports are provided detachably by means of connecting members (44) to supports (24, 43) arranged near the ends of the carrier beam (27), to which the mower member is connected.

15. A machine as claimed in any one of claims 12 to 14, characterized in that a guide plate (91) is disposed spaced above the mower member, which guide plate extends by means of its rear side (107) to near the lower side of the counter-processing members (58).

16. A machine as claimed in any one of the preceding claims, characterized in that it includes a carrier (4) by means of which the machine can be coupled to the lifting hitch (9) of a tractor or a suchlike vehicle.

17. A machine as claimed in claim 16, characterized in that the carrier (4) includes a carrier arm (6) which is arranged by means of its one end to a coupling trestle (8) which forms part of the carrier and can be coupled to the lifting hitch of a tractor or a suchlike vehicle, while its other end includes a transmission box (104) accommodating transmission members which can be coupled to the power takeoff shaft of a tractor or a suchlike vehicle via further transmission members (22) disposed on the carrier, the transmission members in the transmission box being coupled to the carrier shaft (49) of the drum-shaped processing member (56).

18. A mowing machine as claimed in any one of claims 12 to 17, characterized in that the mower-member carrier beam (27) carrying the mower member (32) and the drum-shaped processing member (56) are pivotal together with the counter-processing members relative to the carrier (4).

## Patentansprüche

1. Landwirtschaftliche Maschine zur Aufbereitung von Mähgut, wie z. B. Gras, mit einem um eine Achse (55) drehbaren trommelförmigen Arbeitswerkzeug (56) und mindestens drei Gegen-Arbeitswerkzeugen (58), die mit dem trommelförmigen Arbeitswerkzeug zusammenwirken und über einen Teil und nahe der Umfangsfläche des trommelförmigen Arbeitswerkzeuges angeordnet sind, wobei zwischen benachbarten Gegen-Arbeitswerkzeugen Zwischenräume (65) vorgesehen sind, die sich parallel zur Drehachse des trommelförmigen Arbeitswerkzeuges erstrecken, und wobei die Gegen-Arbeitswerkzeuge auskragende Arme aufweisen, die zumindest im wesentlichen parallel zu einer Ebene gerichtet sind, die sich senkrecht zur Drehachse (55) des trommelförmigen Arbeitswerkzeuges erstreckt,
dadurch gekennzeichnet, daß zumindest die Gegen-Arbeitswerkzeuge (58) durch U-förmige Balken (58) gebildet sind, die mit dem trommelförmigen Arbeitswerkzeug zusammenwirken, wobei die auskragenden Arme (59) durch in dem Querschnitt der Balken enthaltene Schenkel gebildet sind.

2. Maschine nach Anspruch 1,
dadurch gekennzeichnet, daß der Zwischenraum (65, 124) zwischen den benachbarten Gegen-Arbeitswerkzeugen (58, 121) mindestens gleich etwa der Hälfte der Breite eines Balkens ist.

3. Maschine nach Anspruch 1 oder 2,
dadurch gekennzeichnet, daß die Gegen-Arbeitswerkzeuge (58) jeweils an einem Ende mit einem Tragbalken (61) verbunden sind, der sich zumindest im wesentlichen parallel zur Drehachse (55) des trommelförmigen Arbeitswerkzeuges (56) erstreckt.

4. Maschine nach Anspruch 3,
dadurch gekennzeichnet, daß sich jedes Gegen-Arbeitswerkzeug (58) von dem Tragbalken (61) aus in eine Richtung parallel zu einer Ebene erstreckt, die senkrecht zur Drehachse (55) des trommelförmigen Arbeitswerkzeuges (56) verläuft.

5. Maschine nach Anspruch 4,
dadurch gekennzeichnet, daß sich die Gegen-Arbeitswerkzeuge (58) von dem Tragbalken aus über einen Winkel von mehr als 90° um die Drehachse des trommelförmigen Werkzeuges erstrecken.

6. Maschine nach einem der vorhergehenden Ansprüche,
dadurch gekennzeichnet, daß ein Gegen-Arbeitswerkzeug (58) relativ zu der Drehachse (55) des trommelförmigen Werkzeuges (56) beweglich angeordnet ist.

7. Maschine nach Anspruch 6,
dadurch gekennzeichnet, daß ein Gegen-Arbeitswerkzeug (58, 121) relativ zu der Drehachse (55) des trommelförmigen Werkzeuges (56) elastisch bewegbar ist.

8. Maschine nach Anspruch 3 sowie den Ansprüchen 6 oder 7,
dadurch gekennzeichnet, daß der Tragbalken (61) in der Maschine mittels Schwenkachsen (71, 72) schwenkbar angeordnet ist, die sich parallel zur Drehachse des trommelförmigen Arbeitswerkzeuges erstrecken.

9. Maschine nach Anspruch 6, 7 oder 8,
dadurch gekennzeichnet, daß ein Gegen-Arbeitswerkzeug (58) mittels einer Viergelenk-Konstruktion (90) mit dem Rahmen der Maschine beweglich verbunden ist.

10. Maschine nach einem der Ansprüche 6 bis 9,
dadurch gekennzeichnet, daß ein bewegliches Gegen-Arbeitswerkzeug (58) mit einem Rahmenbalken (79) der Maschine verbunden ist, der in Arbeitsrichtung (67) der Maschine gesehen vor dem trommelförmigen Werkzeug (56) angeordnet ist, sich zumindest im wesentlichen parallel zu der Drehachse (55) des trommelförmigen Werkzeuges erstreckt und zumindest im wesentlichen in Höhe der Drehachse angeordnet ist.

11. Maschine nach einem der Ansprüche 6 bis 10,
dadurch gekennzeichnet, daß das bewegliche Gegen-Arbeitswerkzeug (58) mit einem federbelasteten Element (83) zusammenwirkt, das in Richtung eines Anschlages (89) eine Kraft auf das bewegliche Gegen-Arbeitswerkzeug ausübt, wobei das Gegen-Arbeitswerkzeug gegen die Kraft der Feder in eine Richtung auslenkbar ist, die von der Drehachse des trommelförmigen Werkzeuges abgewandt ist.

12. Maschine nach einem der vorhergehenden Ansprüche,
dadurch gekennzeichnet, daß die Maschine mindestens ein an einem Mähglied-Tragbalken (27) angeordnetes Mähglied (32) aufweist, wobei das trommelförmige Arbeitswerkzeug und das Gegen-Arbeitswerkzeug an demselben Teil der Maschine wie das Mähglied angeordnet sind.

13. Maschine nach Anspruch 12,
dadurch gekennzeichnet, daß der Mähglied-Tragbalken Antriebseinheiten (28) und Distanzeinheiten (30) aufweist, die mittels einer Zugstange (31) verbunden sind.

14. Maschine nach einem der vorhergehenden Ansprüche,
dadurch gekennzeichnet, daß das trommelförmige Arbeitswerkzeug (56) und das Gegen-Arbeitswerkzeug (58) zwischen zwei Stützwänden (47, 48) angeordnet sind, die sich zumindest im wesentlichen senkrecht zur Drehachse (55) des trommelförmigen Arbeitswerkzeuges erstrecken, und daß die Stützwände mittels Verbindungsgliedern (44) mit Stützen (24, 43) lösbar verbunden sind, die nahe den Enden des Tragbalkens (27) angeordnet sind, mit dem das Mähglied verbunden ist.

15. Maschine nach einem der Ansprüche 12 bis 14,
dadurch gekennzeichnet, daß eine Führungsplatte (91) mit Abstand über dem Mähglied angeordnet ist, die mittels ihrer Rückseite (107) bis in die Nähe der Unterseite der Gegen-Arbeitswerkzeuge (58) reicht.

16. Maschine nach einem der vorhergehenden Ansprüche,
dadurch gekennzeichnet, daß die Maschine einen Träger (4) aufweist, mittels dessen die Maschine an die Hebevorrichtung (9) eines Schleppers oder ähnlichen Fahrzeuges anzuschließen ist.

17. Maschine nach Anspruch 16,
dadurch gekennzeichnet, daß der Träger (4) einen Tragarm (6) aufweist, dessen eines Ende an einem Anbaubock (8) angeordnet ist, der Bestandteil des Trägers und an die Hebevorrichtung eines Schleppers oder ähnlichen Fahrzeuges anzuschließen ist, während an seinem anderen Ende ein Getriebegehäuse (104) mit Getriebegliedern angeordnet ist, die über weitere an dem Träger angeordnete Getriebeglieder (22) an die Zapfwelle eines Schleppers oder ähnlichen Fahrzeuges anzuschließen sind, wobei die in dem Getriebegehäuse angeordneten Getriebeglieder mit der Tragwelle (49) des trommelförmigen Arbeitswerkzeuges (56) verbunden sind.

18. Mähmaschine nach einem der Ansprüche 12 bis 17,
dadurch gekennzeichnet, daß der das Mähglied (32) tragende Mähglied-Tragbalken (27) und das trommelförmige Arbeitswerkzeug (56) zusammen mit den Gegen-Arbeitswerkzeugen relativ zu dem Träger (4) schwenkbar sind.

## Revendications

1. Machine agricole pour le traitement d'une récolte telle que, par exemple, de l'herbe, laquelle machine comprend un organe traitant (56) en forme de tambour, rotatif autour d'un axe (55) et au moins trois organes contre-traitants (58) coopérant avec l'organe traitant en forme de tambour et s'étendant autour d'une partie de la périphérie dudit organe traitant en forme de tambour et près de cette périphérie, des espaces intermédiaires (65) étant prévus entre des organes contre-traitants adjacents l'un à l'autre dans un sens parallèle à l'axe de rotation de l'organe traitant en forme de tambour, lesdits organes contre-traitants comprenant des bras saillants s'étendant au moins sensiblement parallèlement à un plan s'étendant perpendiculairement à l'axe de rotation (5) de l'organe traitant en forme de tambour,
**caractérisée** en ce qu'au moins les organes contre-traitants (58) sont formés de poutrelles en U (58) coopérant avec l'organe traitant en forme de tambour, lesdits bras saillants (59) étant formés par des ailes incluses dans la section transversale des poutrelles.

2. Machine selon la revendication 1, caractérisée en ce que l'espace intermédiaire (65, 124) entre les organes contre-traitants (58, 121) adjacents est au moins égal à environ la moitié de la largeur d'une poutrelle.

3. Machine selon la revendication 1 ou 2, caractérisée en ce que les organes contre-traitants (58) ont chacun une extrémité reliée à une poutre porteuse (61) qui s'étend au moins sensiblement parallèlement à l'axe de rotation (55) de l'organe traitant (56) en forme de tambour.

4. Machine selon la revendication 3, caractérisée en ce que chaque organe contre-traitant (58) s'étend à partir de la poutre porteuse (61) dans un sens parallèle à un plan s'étendant perpendiculairement à l'axe de rotation (55) de l'organe traitant (56) en forme de tambour.

5. Machine selon la revendication 4, caractérisée en ce que les organes contre-traitants (58) s'étendent à partir de la poutre porteuse autour de l'axe de rotation de l'organe en forme de tambour sur un angle qui dépasse 90°.

6. Machine selon l'une quelconque des revendications précédentes, caractérisée en ce qu'un organe contre-traitant (58) est agencé pour être capable de faire mouvement par rapport à l'axe de rotation (55) de l'organe (56) en forme de tambour.

7. Machine selon la revendication 6, caractérisée en ce qu'un organe contre-traitant (58, 121) est mobile élastiquement par rapport à l'axe de rotation (55) de l'organe (56) en forme de tambour.

8. Machine selon la revendication 3 et la revendication 6 ou 7, caractérisée en ce que la poutre porteuse (61) est couplée dans la machine de manière pivotante par des arbres de pivotement (71,72) s'étendant parallèlement à l'axe de rotation de l'organe traitant en forme de tambour.

9. Machine selon la revendication 6, 7 ou 8, caractérisée en ce qu'un organe contre-traitant (58) est relié en étant capable de faire mouvement au moyen d'une structure quadrangulaire (90) au châssis de la machine.

10. Machine selon l'une quelconque des revendications 6 à 9, caractérisée en ce qu'un organe contre-traitant mobile (58) est relié à une poutre de châssis (79) de la machine, laquelle poutre située en avant de l'organe (56) en forme de tambour, en étant vue dans le sens de marche (67) du travail de la machine, est au moins sensiblement parallèle à l'axe de rotation (55) de l'organe en forme de tambour et est située au moins sensiblement au niveau dudit axe de rotation.

11. Machine selon l'une quelconque des revendications 6 à 10, caractérisée en ce que l'organe contre-traitant mobile (58) coopère avec un élément (83) sollicité par un ressort qui exerce une force sur l'organe contre-traitant mobile en direction d'une butée (89), l'organe contre-traitant ayant la possibilité de s'écarter contre l'action du ressort en s'éloignant de l'axe de rotation de l'organe en forme de tambour.

12. Machine selon l'une quelconque des revendications précédentes, caractérisée en ce que la machine comprend au moins un organe faucheur (32) monté sur une poutre porteuse (27) d'organes faucheurs, l'organe traitant en forme de tambour et l'organe contre-traitant étant disposés sur la partie de la machine qui inclut l'organe faucheur.

13. Machine selon la revendication 12, caractérisée en ce que la poutre portant les organes faucheurs comprend des unités d'entraînement (28) et des entretoises (30) qui sont couplées entre elles au moyen d'un tirant (31).

14. Machine selon l'une quelconque des revendications précédentes, caractérisée en ce que l'organe traitant (56) en forme de tambour et l'organe contre-traitant (58) sont disposés entre deux parois de support (47, 48) qui sont au moins sensiblement perpendiculaires à l'axe de rotation (55) de l'organe traitant en forme de tambour, et en ce que les parois de support sont prévues démontables au moyen d'organes (44) les reliant à des supports (24, 43) disposés près des extrémités de la poutre porteuse (27) à laquelle est relié l'organe faucheur.

15. Machine selon l'une quelconque des revendications 12 à 14, caractérisée en ce qu'une plaque de guidage (91) est disposée en étant espacée au dessus de l'organe faucheur, laquelle plaque s'étend au moyen de son côté postérieur (107) jusqu'à proximité du côté inférieur des organes contre-traitants (58).

16. Machine selon l'une quelconque des revendications précédentes, caractérisée en ce qu'elle comporte un élément porteur (4) au moyen duquel la machine peut être couplée au dispositif d'attelage-levage (9) d'un tracteur ou autre véhicule similaire.

17. Machine selon la revendication 16, caractérisée en ce que l'élément porteur (4) comporte un bras porteur (6) qui est relié par une de ses extrémités à un chevalet d'attelage (8) qui fait partie de l'élément porteur et peut être couplé au dispositif d'attelage-levage d'un tracteur ou d'un véhicule similaire, tandis que son autre extrémité comporte une boîte de transmission (104) logeant des organes de transmission qui peuvent être couplés à l'arbre de prise de force d'un tracteur ou d'un véhicule similaire par l'intermédiaire d'autres organes de transmission (22) disposés sur l'élément porteur, les organes de transmission dans la boîte de transmission étant couplés à l'arbre porteur (49) de l'organe traitant (56) en forme de tambour.

18. Machine faucheuse selon l'une quelconque des revendications 12 à 17, caractérisée en ce que la poutre porteuse (27) des organes faucheurs, portant l'organe faucheur (32) et l'organe traitant (56) en forme de tambour sont pivotants ensemble avec les organes contre-traitants par rapport à l'élément porteur (4).
